Europäisches Patentamt

European Patent Office

Office européen des brevets

(19)

(11) Numéro de publication: **0 158 763**
**A1**

(12)

# DEMANDE DE BREVET EUROPEEN

(21) Numéro de dépôt: 84870033.2

(22) Date de dépôt: 07.03.84

(51) Int. Cl.⁴: **A 01 D 25/04**

(30) Priorité: 09.03.83 BE 210278
17.02.84 BE 212413

(43) Date de publication de la demande:
23.10.85 Bulletin 85/43

(84) Etats contractants désignés:
AT BE DE FR GB IT NL

(71) Demandeur: AGRI-SERVICE Sprl
Place, 58c
B-7564 Molembaix(BE)

(71) Demandeur: COCKERILL SAMBRE Société Anonyme
dite:
Avenue Adolphe Greiner, 1
B-4100 Liege (Seraing)(BE)

(72) Inventeur: Dutrieux, Jean
Place, 58c
B-7564 Molenbaix(BE)

(74) Mandataire: Overath, Philippe et al,
Cabinet Bede 13, Avenue Antoine Depage
B-1050 Bruxelles(BE)

(54) Machine pour l'arrachage et le ramassage de produits agricoles.

(57) La machine comprend au moins deux séries de disques arracheurs (2A, 2B) montées côte à côte du côté arrière d'un support transversal (1, 10), les disques de chaque série sont tous inclinés suivant le même sens, soit à gauche pour la première série (2A), soit à droite pour la deuxième série (2B) formant chaque fois un angle aigu avec la direction d'avancement de la machine (axe 6); ces éléments d'arrachage coopèrent avec un ensemble d'organes de ramassage et de nettoyage comportant plusieurs rangées de turbines, le plan de rotation des turbines (20) du premier rang présentant une inclinaison dans le sens longitudinal par rapport au plan de roation des turbines (24, 28) des rangs suivants.

FIG. 1

1                                           **0158763**

La présente invention concerne les machines pour la récolte de produits agricoles et/ou horticoles et plus particulièrement pour l'arrachage et le ramassage de ceux-ci.

L'arrachage consiste à coincer la plante ou la racine, à la déchausser et à la mettre hors du sol.

Sur la plupart des machines d'arrachage on utilise comme soc d'arrachage des socs à disques concaves qui sont disposés en oblique par rapport au sens d'avancement et qui coopèrent chacun avec une barre de fer ou patin qui pénètre dans le sol. Cet ensemble coince la racine, la soulève et l'arrache du sol par rotation du disque.

Les disques d'arrachage sont habituellement montés en nombre pair sur une poutre transversale et précèdent les organes de ramassage et de nettoyage constitués de turbines rotatives du type "soleil". Ces turbines ou soleil se composent d'une série de barres ou rayons courbés et fixés sur un moyeu central et qui s'étendent radialement jusqu'à un diamètre donné. Les extrémités de ces barres peuvent être reliées par un cerclage, ce qui permet une construction plus légère, moins coûteuse et plus fiable. Toutefois, étant donné que les soleils cerclés peuvent provoquer des bourrages s'ils ne sont pas nettoyés en permanence, il n'est possible d'utiliser ce genre de soleils que pour le ou les organes du premier rang, c'est-à-dire les organes ramasseurs qui sont constamment en contact avec le sol.

En effet jusqu'à présent, les deux ou trois soleils qui se succèdent en ligne l'un derrière l'autre sont situés dans le même plan de rotation, avec des niveaux légèrement décalés et inclinés vers le sol à l'avant de l'ensemble. Pour obtenir un bon rendement et vu cette inclinaison de l'ensemble, le ou les soleils cerclés du premier rang doivent pénétrer dans le sol, ce qui demande beaucoup d'énergie à l'engin tracteur. D'autre part, les soleils pénétrant dans le sol n'ont qu'une durée de vie limitée (usure, détérioration par des obstacles tels que des pierres, etc.) et le sol ainsi manipulé présente beaucoup d'irrégularités après le passage de la récolteuse.

Le bon fonctionnement des éléments d'arrachage est souvent entravé par des bourrages au niveau des disques qui sont en général disposés par paires de disques qui se font face ou qui sont inclinés les uns vers les autres.

Plusieurs dispositions différentes de ces disques ont déjà été proposées comme par exemple leur montage en quinconce selon les inclinaisons alternées sur une poutre droite ou sur une poutre en forme de V ou encore avec des parties déportées (construction compliquée).

Le but de la présente invention est de proposer une machine pour la récolte de produits agricoles et/ou horticoles pourvue d'une disposition originale des disques d'arrachage évitant au maximum tout risque de bourrage et d'un ensemble d'organes de ramassage et de nettoyage de construction légère et fiable, la combinaison des deux permettant d'obtenir d'une part un gain sensible du point de vue énergie nécessaire en limitant au maximum la résistance au sol et d'autre part une bonne nivellation du sol après passage.

La machine selon l'invention se distingue en ce qu'elle comprend au moins deux séries d'éléments ou disques arracheurs montées du côté arrière d'un support transversal, les disques étant disposés côte à côte, et en ce que les disques de chaque série sont tous inclinés suivant le même sens, soit à gauche pour la première série, soit à droite pour la seconde série, formant chaque fois un angle aigu avec la direction d'avancement de la machine, ces éléments d'arrachage coopérant avec un ensemble d'organes de ramassage et de nettoyage comportant des turbines dont le plan de rotation présente une légère inclinaison dans le sens longitudinal et/ou dans le sens latéral par rapport à la direction d'avancement de la machine.

Un autre objet de l'invention est que les organes de ramassage et de nettoyage comprennent une succession de turbines tournantes dont le plan de rotation de la ou des turbines du premier rang présente une inclinaison dans le sens longitudinal par rapport au plan de rotation des turbines suivantes.

Cette inclinaison des turbines du premier rang par rapport aux turbines suivantes est obtenue par une inclinaison du plan de rotation du sens longitudinal de la ou des turbines du premier rang entre 0 et quelques degrés (de préférence maximum 5°) par rapport au niveau du sol et par une inclinaison par rapport au plan de rotation des turbines suivantes entre 0° et 20°.

Afin de mieux faire comprendre l'invention, on en décrira ci-après des exemples de réalisation préférées en référence aux dessins ci-joints :

Figure 1 est une vue schématique en plan montrant l'implantation d'une rangée de disques d'arrachage sur le châssis d'une machine selon l'invention.

Figure 2 est une vue de détail de la fixation d'un disque à la poutre.

Figure 3 est une vue en plan montrant une variante avec deux rangées de disques.

Les figures 4A, 4B et 4C sont des vues de face de chaque fois une paire de turbines de ramassage avec variation d'inclinaison et sens de rotation.

Figure 5 est une vue latérale d'un ensemble d'organes de ramassage et de nettoyage selon l'invention.

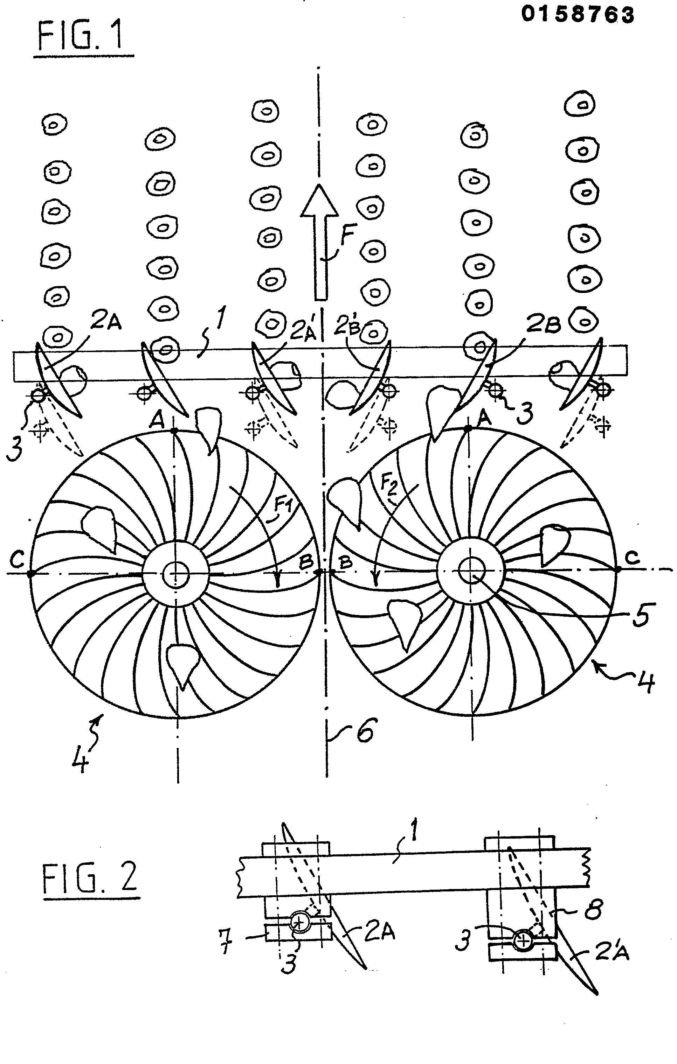

Sur la figure 1, on a montré une poutre transversale 1 faisant partie du châssis de la machine et portant deux séries de trois disques d'arrachage écartés les uns des autres de manière à pouvoir effectuer chacun simultanément l'arrachage d'un des six rangs consécutifs de betteraves. Une série de disques 2A est inclinée vers la gauche et l'autre série de disques 2B est inclinée vers la droite.

Chaque disque rotatif 2A, 2B est monté sur un axe vertical 3 qui est fixé par un clamage 7 à la poutre 1 et qui permet le réglage de l'inclinaison du disque 2 par rapport à la direction d'avancement ainsi que la profondeur.

Comme déjà mentionné dans le préambule, les disques sont associés avec des patins (non représentés) permettant le

gu_.age des disques par rapport aux rangées de betteraves.

Derrière la poutre 1 avec les disques 2A, 2B sont disposées les turbines 4 tournant autour de leurs axes 5.

Conformément à l'invention, les axes 3 verticaux des disques 2 sont tous montés à l'arrière de la poutre 1 par rapport au sens d'avancement (flèche F) et les disques de chaque série 2A, 2B sont inclinés suivant un même sens par rapport à l'axe de symétrie 6 de la machine de telle sorte que seuls les deux disques 2'A et 2'B du milieu se font face.

Eventuellement les disques 2'A et 2'B du milieu et les disques extérieurs peuvent être montés sur la poutre 1 par l'intermédiaire de pièces de distance 8 (figure 2) permettant leur recul par rapport aux autres disques 2 ainsi que représenté en traits pointillés sur le dessin.

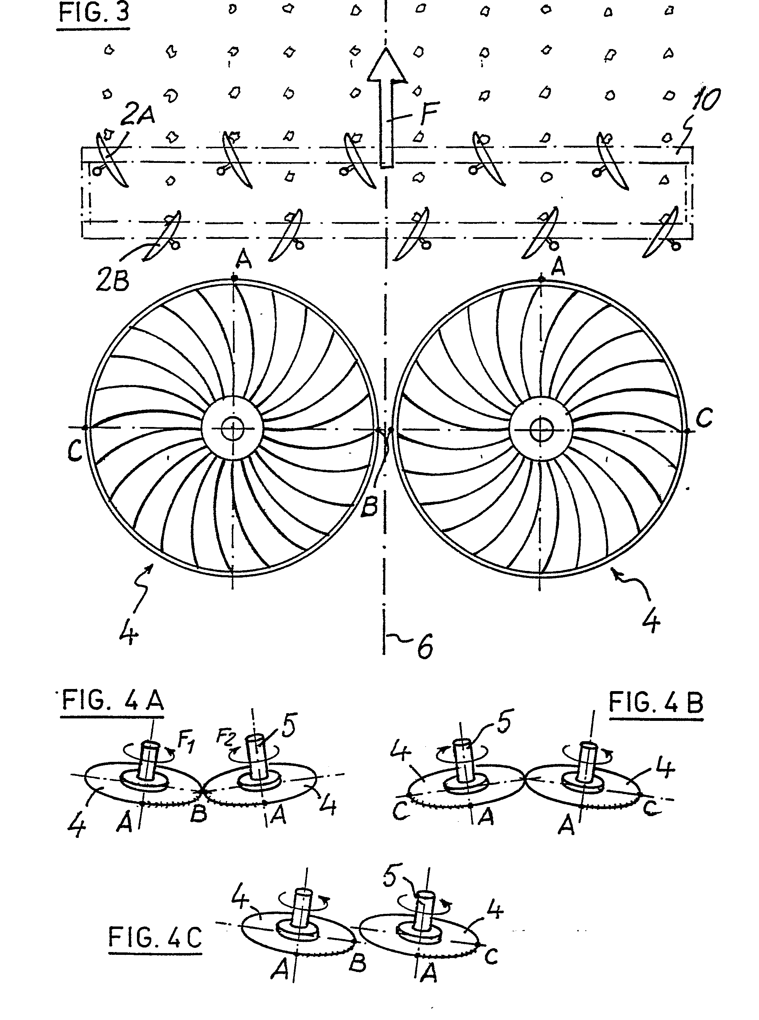

Sur la figure 3 on a montré une variante de réalisation dans laquelle les deux séries de disques arracheurs 2A et 2B sont montées respectivement suivant deux rangées successives sur un support 10 avec deux poutres transversales.       .

Cette configuration est particulièrement intéressante pour des produits agricoles et/ou horticoles qui sont semés ou plantés en rangées très rapprochées.

Comme montré sur la figure 1, les turbines 4 tournent vers l'intérieur mais d'autres sens de rotation et d'autres dispositions ou nombre de turbines sont possibles.

Les axes des turbines 4 seront de préférence inclinés vers l'avant et on peut également prévoir une légère inclinaison vers l'intérieur ou vers l'extérieur de manière que seulement un secteur d'environ 90° vienne en contact avec le sol.

Ce secteur se situe entre les points A à B des figures 1 et 4A lorsque les turbines 4 tournent vers l'intérieur suivant les flèches $F_1$ et $F_2$. Par contre et comme illustré à la figure 4B, ce secteur se situe entre les points A et C lorsque les turbines 4 tournent vers l'extérieur et respectivement entre les points A, B et A, C lorsque les turbines 4 tournent dans le même sens (figure 4C).

La machine conforme à l'invention est particulièrement intéressante pour l'arrachage simultané de plusieurs rangs
de betteraves avec la réalisation suivant la figure 1 et pour
plusieurs rangées rapprochées de produits horticoles avec la
réalisation suivant la figure 2.

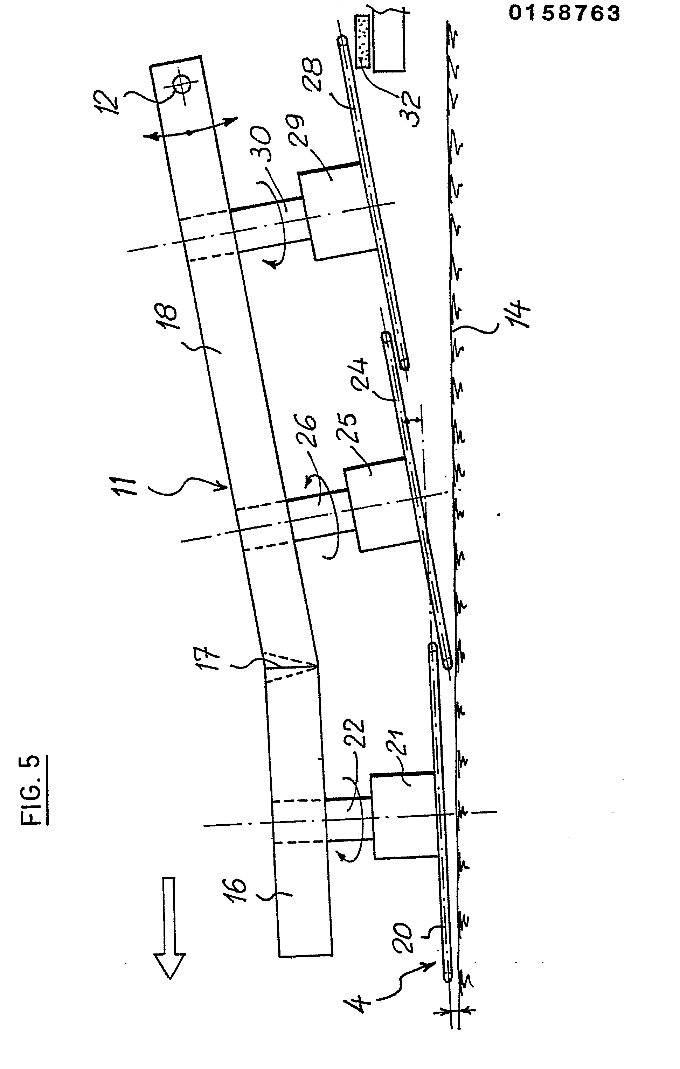

Sur la figure 5, on a représenté un ensemble d'organes de ramassage et de nettoyage comprenant en 11 un châssis
mobile pouvant pivoter autour de l'axe 12 solidaire du châssis
principal de l'engin agricole (tracteur) de manière à pouvoir
régler la hauteur des organes ramasseurs-décrotteurs par rapport
au niveau du sol 14.

Vers l'extrémité avant 16 du châssis 11 est monté le
ou les organes rotatifs 20 du premier rang avec moyeu 21 et
support 22. Ensuite le châssis 11 comporte successivement le ou
les organes du deuxième rang 24 avec moyeu 25 et support 26 et les
organes du troisième rang 28 avec moyeu 29 et support 30.

Conformément à l'invention, l'extrémité avant 16 du
châssis 11 comprenant l'organe du premier rang 20 est inclinée
par rapport à la partie arrière 18 sur laquelle sont montés respectivement les organes des deuxième et troisième rangs.

Le ou les organes 20 du premier rang sont inclinés
entre 0° et 5° par rapport au sol et viennent légèrement en
contact avec celui-ci. Leur fonction est de ramasser les tubercules arrachés et éparpillés sur le sol par une opération précédente et des les transférer ensuite aux organes suivants 24-28
par lesquels les tubercules sont nettoyés (décrottés) et convoyés
vers l'arrière de la machine pour être transportés par exemple
par un élévateur à paniers.

Du fait de la faible inclinaison par rapport aux sol
de la turbine 20 du premier rang, la turbine 24 du deuxième rang
se rapproche du sol jusqu'à venir l'effleurer. Ceci a pour effet
que cette turbine 24 sera constamment nettoyée par son contact
avec le sol et peut dès lors être remplacée par une turbine
cerclée de construction légère.

Avantageusement la turbine 28 du troisième rang sera aussi du genre cerclé et pour éviter les bourrages possibles, la périphérie arrière de cette turbine passera à proximité d'un élément tel que la courroie 32 du transporteur suivant de manière à réaliser un nettoyage permanent.

Par conséquent, toutes les turbines utilisées dans l'ensemble ramasseur-décrotteur suivant l'invention seront du genre cerclé ce qui diminue sensiblement le poids de l'ensemble tout en augmentant la fiabilité du mécanisme.

On peut également prévoir en 17 un réglage de l'inclinaison du châssis 11 entre l'extrémité avant 16 et la partie arrière 18 pouvant varier entre 0 et 20°.

Une variante de réalisation consiste à prévoir indépendamment de la faible inclinaison des turbines 20 du premier rang dans le sens longitudinal, également une légère inclinaison dans le sens latéral (c'est-à-dire vers le côté gauche ou vers le côté droit) ainsi que cela a déjà été décrit ci-dessus (voir figures 4A, B, C).

Bien entendu diverses modifications peuvent être apportées par l'homme de l'art au dispositif qui vient d'être décrit uniquement à titre d'exemple non limitatif sans sortir du cadre de l'invention.

## REVENDICATIONS

1. Machine pour la récolte de produits agricoles et/ou horticoles comprenant au moins une rangée de disques arracheurs montés sur un support transversal en amont d'un ensemble d'organes de ramassage et de nettoyage, caractérisée en ce qu'elle comprend au moins deux séries de disques arracheurs (2A, 2B) montées du côté arrière du support transversal (1, 10), les disques étant disposés côte à côte, et en ce que les disques de chaque série sont tous inclinés suivant le même sens, soit à gauche pour la première série (2A), soit à droite pour la deuxième série (2B) formant chaque fois un angle aigu avec la direction d'avancement de la machine (axe 6) ces éléments d'arrachage coopérant avec un ensemble d'organes de ramassage et de nettoyage comportant des turbines (4, 20) dont le plan de rotation présente une légère inclinaison dans le sens longitudinal et/ou dans le sens latéral par rapport à la direction d'avancement de la machine.

2. Machine selon la revendication 1, caractérisée en ce que les organes de ramassage et de nettoyage sont composés de plusieurs rangées de turbines, le plan de rotation des turbines (20) du premier rang présentant une inclinaison dans le sens longitudinal par rapport au plan de rotation des turbines (24, 28) des rangs suivants.

3. Machine selon la revendication 1, caractérisée en ce que les disques arracheurs sont montés à l'arrière d'au moins une poutre transversale du châssis et en ce que les disques (2A, 2B) sont inclinés dans un même sens par rapport à l'axe de symétrie (6) de la machine de telle sorte que seuls les deux disques du milieu (2'A, 2'B) se font face.

4. Machine selon la revendication 1, caractérisée en ce que les deux séries de disques arracheurs (2A, 2B) sont montées respectivement suivant deux rangées successives sur un support (10) avec deux parties transversales.

5. Machine selon les revendications 1, 3 et 4 caractérisée en ce que les disques arracheurs sont montés sur la poutre (1) par clamage (7) ou par l'intermédiaire de pièces de distance (8) leur permettant un positionnement en recul par rapport aux autres disques (2'A, 2'B) et un rapprochement vers la périphérie des turbines du premier rang.

6. Machine selon la revendication 1, caractérisée en ce que les turbines (4), montées en aval des éléments arracheurs (2A, 2B), sont légèrement inclinées vers l'avant et latéralement de manière que seul un secteur (A-B ou A-C) d'environ 90° vienne en contact avec le sol, ce secteur pouvant se situer entre le point le plus avancé (A) de la turbine et soit l'extrémité intérieure (B) soit l'extrémité extérieure (C) et ce en fonction de l'inclinaison latérale de l'axe (5) des turbines (4), cette inclinaison latérale étant adaptée suivant le sens de rotation des turbines (figures 4A, B, C).

7. Machine selon la revendication 1, caractérisée en ce que le plan de rotation des turbines (20) du premier rang est incliné dans le sens longitudinal suivant un angle compris entre 0 et 5° par rapport au niveau du sol et en ce que le plan de rotation des turbines suivantes (24-28) est incliné dans le sens longitudinal suivant un angle compris entre 0° et 20° par rapport au plan de rotation des turbines (20) du premier rang.

8. Ensemble selon les revendications 1 et 2, caractérisé en ce que la périphérie de la turbine (28) du dernier rand passe à proximité d'un organe (32) du transporteur ou élévateur situé derrière l'ensemble de ramassage et de nettoyage.

9. Ensemble selon les revendications 1 et 2, caractérisé en ce que l'extrémité avant (16) du châssis mobile (10), sur lequel sont montées la ou les turbines (20) du premier rang, est inclinée par rapport à la partie arrière (18) sur laquelle sont montés les turbines (24, 28) des rangs suivants.

10. Ensemble selon la revendication 9, caractérisé en ce que l'inclinaison de l'extrémité avant (16) du châssis mobile (10) par rapport à la partie arrière (18) est réglable (en 17).

0158763

FIG. 1

FIG. 2

0158763

**FIG. 3**

**FIG. 4 A**

**FIG. 4 B**

**FIG. 4 C**

FIG. 5

# RAPPORT DE RECHERCHE EUROPEENNE

Office européen
des brevets

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-1 524 119  (ETABLISSEMENTS BARRAULT-LEPINE) <br> * Page 2, figures * | 1,3,5 | A 01 D   25/04 |
| A | | 6 | |
| | --- | | |
| A | DE-A-2 828 123  (LAFORGE) <br> * Figures 2,5 * | 1-3,8 | |
| | --- | | |
| A | FR-A-2 413 867  (HERRIAU S.A.) <br> * Figure 1 * | 1-3 | |
| | --- | | |
| A | FR-A-2 247 151  (M.E.G. CAPPON) <br> * Figures * | 5 | |
| | ----- | | |

**DOMAINES TECHNIQUES RECHERCHES (Int. Cl.4)**

A 01 D   19/00
A 01 D   25/00
A 01 D   27/00

Le présent rapport de recherche a été établi pour toutes les revendications

| Lieu de la recherche | Date d'achèvement de la recherche | Examinateur |
|---|---|---|
| BERLIN | 08-05-1985 | WUNDERLICH J E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant